# EUROPEAN PATENT SPECIFICATION

(11) **EP 2 492 321 B1**
(45) Date of publication and mention of the grant of the patent: **22.01.2020**
(21) Application number: 10824585.3
(22) Date of filing: 15.07.2010
(51) Int. Cl.: C09D 11/00, B41J 2/01, B41M 5/00

(54) **OIL-BASED INK-JET INK**
TINTENSTRAHLTINTE AUF ÖLBASIS
ENCRE POUR IMPRESSION JET D'ENCRE À BASE D'HUILE

(30) Priority: 23.10.2009 JP 2009244122
(43) Date of publication of application: 29.08.2012
(73) Proprietor: Riso Kagaku Corporation, Tokyo 108-8385 (JP)
(72) Inventor: ENDO, Toshihiro, Inashiki-gun Ibaraki 300-0333 (JP); ARAI, Masakatsu, Inashiki-gun Ibaraki 300-0333 (JP); YAMADA, Kenji, Inashiki-gun Ibaraki 300-0333 (JP); KURIYAMA, Katsumi, Inashiki-gun Ibaraki 300-0333 (JP); TANAKA, Atsushi, Inashiki-gun Ibaraki 300-0333 (JP); KAWAKAMI, Kazuya, Inashiki-gun Ibaraki 300-0333 (JP); SHIMURA, Shin-ichiro, Inashiki-gun Ibaraki 300-0333 (JP); KON, Shotaro, Inashiki-gun Ibaraki 300-0333 (JP); MATSUZAWA, Yoshiaki, Inashiki-gun Ibaraki 300-0333 (JP); NOMURA, Kohji, Inashiki-gun Ibaraki 300-0333 (JP)
(74) Representative: Klunker IP Patentanwälte PartG mbB
(86) International application number: PCT/JP2010/004604
(87) International publication number: WO 2011/048730

(56) References cited:
- EP-A1- 2 210 922
- WO-A1-97/15633
- WO-A1-2009/063656
- JP-A- H11 279 467
- JP-A- 2004 002 666
- JP-A- 2005 290 035
- JP-A- 2005 290 064
- JP-A- 2007 126 564
- JP-A- 2010 195 909
- US-A1- 2009 196 994

## Description

### BACKGROUND OF THE INVENTION

### Field of the Invention

The present invention relates to an oil-based inkjet ink, and in particular to an oil-based inkjet ink which can suppress accumulation of solid.

The present invention also relates to a method for preparing the oil-based inkjet ink, and to the use of the oil-based inkjet ink for suppressing accumulation of solid in the vicinity of nozzles of an inkjet head.

### Description of the Related Art

Inkjet recording systems eject highly fluid inkjet inks from very thin head nozzles as ink particles to record an image on a print receiving material, which is positioned to face the nozzles. Because of low noise and ability of high-speed printing, the inkjet recording systems are rapidly becoming widely used in recent years. As an ink for use with the inkjet recording systems, various types of so-called oil-based inkjet inks, which are formed by finely dispersing a pigment in a non-water-soluble solvent, have been proposed.

For example, the present inventors have proposed, in Japanese Unexamined Patent Publication No. 2007-126564, an ink formed by dispersing a pigment in a nonpolar solvent, such as an ester solvent, a higher alcohol solvent or a hydrocarbon solvent. This ink is advantageous in that it has excellent on-machine stability and it can provide a printed surface that does not adhere to another printed surface printed with a PPC duplicator or a laser printer even when they are stacked in contact with each other.

However, in general, when an oil-based inkjet ink is used for long time, solids will accumulate in the vicinity of the nozzles of the inkjet head, and this hinders normal ejection of the ink and may result in defective images. Conventionally, causes of this ink clogging are believed to be thickening of the ink or agglomeration of the pigment due to condensation of the ink in the nozzles, generation of a significant amount of coarse particles during dispersion, agglomeration caused by temporal change due to poor stability of the dispersed pigment, etc. (see, for example, Japanese Unexamined Patent Publication No. 2004-2666).

Such clogging induces defective ejection, such as deviated flight of ink droplets, scattering of ink droplets, etc., and is not desirable. Therefore, conventionally, in line with the above-described causes, approaches, such as suppressing the thickening of the ink by selecting a solvent, a resin, etc., separating and removing the agglomerated particles by controlling the mean particle size of the pigment, or suppressing the pigment agglomeration by adsorbing a specific dispersant onto a pigment, have been studied.

JP 2005 290064 A discloses an oily ink for inkjet recording, the ink containing a solvent composed mainly of an ester solvent and an alcohol solvent, a pigment dispersing agent and a pigment. The ink has shelf stability and on-machine stability.

US 2009/196994 A1 discloses an ink set for inkjet printing comprising a first ink and a second ink, the first ink comprising at least a first solvent, a coloring material and a dispersing agent for the coloring material, and the second ink comprising at least a second solvent capable of changing solubility of the dispersing agent so as to cause aggregation of the coloring agent when the second ink is mixed with the first ink.

JP H 11279467 A discloses an inkjet ink comprising a treated pigment, a high-boiling solvent, and a dispersant, wherein the pigment is prepared by kneading a mixture of at least an organic pigment (A), a water-soluble inorganic salt (B), and a water-soluble solvent (C), to effect pulverization of the pigment A, and washing components B and C away.

WO 97/15633 A1 discloses an inkjet printer dispersion ink containing a dispersant having basic of acid groups, a non-destabilizing amount of a neutralizer for said groups, and a diluent which is non-aqueous or substantially non-aqueous.

JP 2005 290035 A discloses a non-aqueous inkjet ink composed of at least a pigment, a diluting solvent, a dispersing agent and an antioxidant, the non-aqueous inkjet ink being improved in storage stability and discharge performance.

However, the present inventors have found through intensive study that the main cause of the agglomeration of solid in the vicinity of the nozzles is actually a water-soluble metal salt, although the ink is an oil-based ink, and components dissolved in a slight amount of water contained in raw materials of the ink (a pigment, a resin, a solvent and other additives) accumulate in the vicinity of a member that contacts the ink, i.e., the nozzles, as solids along with evaporation of the moisture.

### SUMMARY OF THE INVENTION

In view of the above-described circumstances, the present invention is directed to providing an oil-based inkjet ink which can suppress accumulation of solid in the vicinity of nozzles of an inkjet head.

Subject-matter of the present invention is an oil-based inkjet ink as claimed in claim 1, a method for preparing the oil-based inkjet ink as claimed in claim 2, and the use of the oil-based inkjet ink claimed in claim 3.

The pigment is a copper phthalocyanine.

As described above, approaches taken with conventional oil-based inks to solve the problem of clogging of the nozzles, such as providing a formulation to suppress thickening of the ink at the stage of preparation of the ink, contriving ways to disperse a pigment to suppress agglomeration of the pigment, or using a special pigment dispersant, are not based on the true nature of the agglomeration of solid in the vicinity of the nozzles. Therefore, new agglomeration occurs due to temporal change after preparation of the ink, and sufficient stability of ejection from the nozzles may not be achieved even with an ink which is supposed to have the pigment agglomeration suppressed.

In contrast, in the oil-based inkjet ink of the invention, the contents of calcium and magnesium, which are the cause of formation of metal salts, are reduced such that the calcium content in the ink is 8 ppm or less and the magnesium content in the ink is 3 ppm or less. Therefore, the accumulation of solid in the vicinity of the nozzles of the inkjet head can be suppressed. Further, the oil-based inkjet ink with the reduced calcium and magnesium contents can effectively suppress the accumulation of solid in the vicinity of the nozzles for a long period of time, since the calcium and magnesium contents are not increased by temporal change.

### DESCRIPTION OF THE PREFERRED EMBODIMENTS

Hereinafter, an oil-based inkjet ink of the invention will be described in detail. The oil-based inkjet ink of the invention (which will hereinafter be simply referred to as "ink") is characterized by that a calcium content in the ink is 8 ppm or less and a magnesium content in the ink is 3 ppm or less, or more preferably, the calcium content in the ink is 7 ppm or less and the magnesium content in the ink is 1.4 ppm or less. All the organic solvent used in the ink is water-insoluble. Among components forming an ink, a pigment, in particular, contains a significant amount of calcium and magnesium (which may hereinafter be collectively referred to as "polyvalent metals"). This is because that an industrial water is often used during synthesis and production processes of pigments, and the polyvalent metals contained in the industrial water remain in the pigments. Further, in most cases, the polyvalent metals are also detected from a typical polymeric dispersant and a typical organic solvent, which are other components forming an ink. Therefore, in a case where no special treatment to reduce the metal content is conducted, the calcium content in an ink is typically more than 8 ppm and the magnesium content in the ink is typically more than 3 ppm.

There are various methods to reduce the polyvalent metal content in the ink, and preferred examples thereof may include: washing raw materials, such as the pigment, of the ink with ion-exchanged water; or contacting the prepared ink with a substance that can remove the polyvalent metals from the ink. The former method may include washing the pigment with the ion-exchanged water. Specifically, although it depends on the formulation of the ink, the ink of the invention can be prepared by providing a calcium content in the pigment of 150 ppm or less, or more preferably 100 ppm or less, and a magnesium content in the pigment of 50 ppm or less, or more preferably 30 ppm or less. Further, there are cases where a pigment derivative (synergist) is used as a dispersing aid to improve dispersibility of the pigment, and it is also effective to wash the synergist with the ion-exchanged water. The ink of the invention can be prepared by providing a calcium content in the synergist of 100 ppm or less, or more preferably 70 ppm or less, and a magnesium content in the synergist of 30 ppm or less, or more preferably 20 ppm or less.

The latter method may include contacting the prepared ink with an ion-exchange resin. The ion-exchange resin used may be selected, as appropriate, from conventionally known cationic or amphoteric ion-exchange resins, and examples thereof may include: AMBERLITE IR120BNa, IR124Na, 200CTNa and 252Na, and AMBERJET 1020H and 1024H available from Organo Corporation; and IXE-100, 300, 500, 530, 550, 633, 6107, 6136 available from Toagosei Co., Ltd., etc. Among them, IXE-6107 and 6136 in the form of powder are more preferable in view of treatment efficiency and handling. This method of contacting the prepared ink with the ion-exchange resin does not require conducting the treatment to reduce the polyvalent metal content in the raw materials individually for each raw material. Therefore, the number of steps of a process can be reduced when compared to a process where the treatment is conducted individually for each raw material, and the ink with the reduced polyvalent metal content can stably obtained even in a case where there is variation in the polyvalent metal content of raw materials, such as the pigment, between lots.

Measurement of the calcium and magnesium contents in the raw materials, such as the pigment and the pigment derivative, of the ink and the calcium and magnesium contents in the prepared ink can be achieved by ashing the raw materials, such as the pigment and the pigment derivative, of the ink or the prepared ink, dissolving the ashed product in nitric acid, and carrying out ICP emission analysis of the resulting solution.

It should be noted that it is possible to indirectly measure the polyvalent metal content in the ink, and examples of the usable method may include centrifugal separation, ion chromatography and capillary electrophoresis, which are used to evaluate a polyvalent metal concentration in an aqueous ink. Among then, the capillary electrophoresis is preferred in view of high measurement accuracy and low sample consumption; however, this method is not directly applicable to the measurement of the oil-based ink, which has a very low ionization degree. It has been found through study that simple measurement of the polyvalent metal content can be achieved by mixing water with the oil-based ink and extracting only the water to conduct measurement of the extracted water (a water extract of the ink) by the capillary electrophoresis.

A polyvalent metal content determined by this measurement method is lower than the actual polyvalent metal content in the ink, since not all the polyvalent metals in the ink transfer into the water extract. However, with the ICP emission analysis, in general, it takes time to prepare a measurement sample by ashing the oil-based ink and dissolving the resulting ashed product in nitric acid to carry out the measurement. In contrast, with the capillary electrophoresis, a measurement sample can easily be prepared by mixing water with the oil-based ink and extracting only the water, and this is advantageous in achieving the test in a very simple manner on a production line.

The organic solvent used in the invention is a non-water-soluble organic solvent, such as a hydrocarbon solvent, an ester solvent, an alcohol solvent, a higher fatty acid solvent, etc. The organic solvent may be used singly or in mixture of two or more species. In a case where two or more species of organic solvents are mixed, the mixture needs to form a single continuous phase.

Examples of the hydrocarbon solvent may include an aliphatic hydrocarbon solvent, an alicyclic hydrocarbon solvent, an aromatic hydrocarbon solvent, etc. Examples of the aliphatic hydrocarbon solvents and alicyclic hydrocarbon solvents may include: TECLEAN N-16, TECLEAN N-20, TECLEAN N-22, NO. 0 SOLVENT L, NO. 0 SOLVENT M, NO. 0 SOLVENT H, AF-4, AF-5, AF-6 and AF-7 (all of which are trade names) available from Nippon Oil Corporation; NISSEKI ISOSOL and NISSEKI NAPHTESOL (all of which are trade names) available from Nippon Petrochemicals Co., Ltd.; and ISOPAR G, ISOPAR H, ISOPAR L, ISOPAR M, EXXSOL D40, EXXSOL D80, EXXSOL D100 and EXXSOL D140 (all of which are trade names) available from Exxon Mobil Corporation, etc.

Examples of the ester solvent may include methyl laurate, isopropyl laurate, isopropyl myristate, isopropyl palmitate, isooctyl palmitate, isostearyl palmitate, methyl oleate, ethyl oleate, isopropyl oleate, butyl oleate, methyl linoleate, isobutyl linoleate, ethyl linoleate, isopropyl isostearate, soybean oil methyl ester, soybean oil isobutyl ester, tall oil methyl ester, tall oil isobutyl ester, diisopropyl adipate, diisopropyl sebacate, diethyl sebacate, propylene glycol monocaprate, trimethylolpropane tri-2-ethylhexanoate, glyceryl tri-2-ethylhexanoate, etc.

Examples of the alcohol solvent may include isomyristyl alcohol, isopalmityl alcohol, isostearyl alcohol, oleyl alcohol, etc.

Preferred examples of the higher fatty acid-based solvent may include isononanoic acid, isomyristic acid, isopalmitic acid, oleic acid, isostearic acid, etc.

The addition amount of the organic solvent used in the invention is 60 mass % or more, or more preferably in the range from 70 to 98 mass % relative to the total amount of the ink.

The pigment used in the invention is copper phthalocyanine pigment. Additional pigments may be present, the additional pigments being not particularly limited, and any of conventionally known inorganic pigments and organic pigments may be used in addition to the copper phthalocyanine pigment. Examples of the inorganic pigments may include titanium oxide, colcothar, cobalt blue, ultramarine, iron blue, carbon black, calcium carbonate, kaolin, clay, barium sulfate, talc and silica. Examples of the organic pigments may include insoluble azo pigment, azo lake pigment, condensed azo pigment, and condensed polycyclic pigment. These additional pigments may be used singly or in mixture of two or more species, as appropriate. The addition amount of the pigment may preferably be in the range from 0.5 to 20 mass % relative to the total amount of the ink.

The pigment dispersant is not particularly limited as long as it allows a colorant to be used to stably be dispersed in the solvent. Examples thereof may include: SOLSPERSE 5000 (copper phthalocyanine derivative), 11200, 13940 (polyester amine-based), 17000, 18000 (aliphatic amine-based), 22000, 24000 and 28000 (all of which are trade names) available from Lubrizol Japan Limited; EFKA 400, 401, 402, 403, 450, 451, 453 (modified polyacrylate), 46, 47, 48, 49, 4010, 4050 and 4055 (modified polyurethane) (all of which are trade names) available from Efka CHEMICALS; DEMOL P, EP, POIZ 520, 521, 530 and HOMOGENOL L-18 (polycarboxylic acid-based polymeric surfactant) (all of which are trade names) available from Kao Corporation; DISPARLON KS-860 and KS-873N4 (amine salt of polymeric polyester) (all of which are trade names) available from Kusumoto Chemicals, Ltd.; DISCOL 202, 206, OA-202 and OA-600 (multi-chain polymeric non-ionic) (all of which are trade names) available from Dai-Ichi Kogyo Seiyaku Co., Ltd., etc.

Examples of the oil-based inkjet ink of the invention are described below.

### EXAMPLES

### Preparation of copper phthalocyanine (washed) and Disazo Yellow (washed)

Each of copper phthalocyanine (CYANINE BLUE KRG, available from Sanyo Color Works, LTD.) and Disazo Yellow (SEIKAFAST YELLOW 2200, available from Dainichiseika Color & Chemicals Mfg. Co., Ltd.) was mixed by an amount of 10 mass % in ion-exchanged water and stirred for one hour to disperse it, and the dispersion was filtered. This operation was repeated three times, and the filtered product was dried to obtain a washed product of each of the copper phthalocyanine (KRG) and Disazo Yellow.

### Preparation of copper phthalocyanine derivative (washed)

A copper phthalocyanine derivative (SOLSPERSE 5000, available from Lubrizol Japan Limited) was mixed by an amount of 10 mass % in ion-exchanged water and stirred for one hour to disperse it, and the dispersion was filtered. This operation was repeated three times, and the filtered product was dried to obtain a washed product of the copper phthalocyanine derivative (SOLSPERSE 5000).

### Measurement of Ca concentration and Mg concentration in pigment and dispersant

Each of the copper phthalocyanine (unwashed and washed ones), Disazo Yellow (unwashed and washed ones), copper phthalocyanine (Cyanine Blue 4940, available from Dainichiseika) (unwashed), and copper phthalocyanine derivative (unwashed and washed ones) prepared as described above was carbonized by heating with a burner, and was ashed by heating with an electric furnace. Each ashed product was subjected to thermolysis with nitric acid, and dissolved in dilute nitric acid at a constant volume. The calcium concentration and the magnesium concentration of each solution were measured by ICP emission spectrochemical analysis. The results of the measurement are shown in Table 1.

**Table 1**

| | Trade name | Ca (ppm) | Mg (ppm) |
|---|---|---|---|
| Copper phthalocyanine | KRG | 237 | 70 |
| | KRG (washed) | 90 | 25 |
| | CYANINE BLUE 4940 | 159 | 53 |
| Copper phthalocyanine derivative | SOLSPERSE 5000 | 250 | 35 |
| | SOLSPERSE 5000 (washed) | 62 | 6 |
| Disazo Yellow (reference) | SEIKAFAST YELLOW 2200 | 201 | 57 |
| | SEIKAFAST YELLOW 2200 (washed) | 83 | 22 |

As can be seen from Table 1 above, the washed products washed with the ion-exchanged water had reduced calcium and magnesium contents. Then, ink samples were prepared with using these washed and unwashed products.

### Preparation of ink

With respect to Examples 1 to 5, Reference Example 6 and Comparative Examples 1 to 3, ink samples were prepared by premixing materials according to each composition shown in Table 2 below (the numerical values shown in Table 2 are in parts by mass) and dispersing the materials with a bead mill for about 10 minutes. With respect to Example 5, an ink sample was prepared by premixing materials according to a composition shown in Table 2 and dispersing the materials with a bead mill for about 10 minutes, and then 10 kg of this ink sample was circulated in a column which is charged with an inorganic ion-exchange resin (IXE-6107, available from Toagosei Co., Ltd.) for 12 hours. The prepared ink samples were measured and evaluated for the following items.

### Measurement of Ca concentration and Mg concentration in ink - ICP emission spectrochemical analysis

Each of the prepared ink samples was carbonized by heating with a burner, and then ashed by heating with an electric furnace. Each ashed product was subjected to thermolysis with nitric acid, and dissolved in dilute nitric acid at a constant volume. The calcium concentration and the magnesium concentration of each solution were measured by ICP emission spectrochemical analysis.

### Rate of ejection failure

Each of the prepared ink samples was charged in an inkjet printer, ORPHIS-X9050 (trade name; available from Riso Kagaku Corporation), and solid images were printed for six months at a frequency of about 10 hours/week. A solid image printed after six months was checked, and the number of nozzles which caused deviation of dot landing positions was counted to find the number of nozzles causing the deviation relative to all the nozzles (100), and the following evaluation was made. The results are shown in Table 2 together with the formulation of each ink sample.
A: less than 5%
B: 5% or more and less than 20%
C: 20% or more and less than 50%
D: 50% or more

**Table 2**

| | | Trade name | Manufacturer | Ex. 1 | Ex. 2 | Ex. 3 | Ex. 4 | Ex. 5 | Ref. Ex. 6 | Comp. Ex. 1 | Comp. Ex. 2 | Comp. Ex. 3 |
|---|---|---|---|---|---|---|---|---|---|---|---|---|
| Pigment | Copper phthalocyanine | CYANINE BLUE KRG | Sanyo Color Works | | | | | 5 | | 5 | | |
| | | CYANINE BLUE KRG (washed) | | 5 | 5 | 5 | 3 | | | | | |
| | | CYANINE BLUE 4940 | Dainichiseika | | | | | | | | 5 | |
| | Disazo Yellow | SEIKAFAST YELLOW 2200 | Dainichiseika | | | | | | | | | 5 |
| | | SEIKAFAST YELLOW 2200 (washed) | | | | | | | 5 | | | |
| Dispersant | Copper phthalocyanine derivative | SOLSPERSE 5000 | Lubrizol Japan | | 0.5 | | | 0.5 | | | | |
| | | SOLSPERSE 5000 (washed) | | | | 0.5 | | | | | | |
| | Polyester dispersant | SOLSPERSE 18000 | Lubrizol Japan | 3 | 3 | 3 | 2 | 3 | 3 | 3 | 3 | 3 |
| Solvent | Isooctyl palmitate | IOP | Nikko Chemicals | 30 | 29.5 | 29.5 | 33 | 29.5 | 30 | 30 | 30 | 30 |
| | Isostearyl alcohol | FOC180 | Nissan Chemical Industries | 12 | 12 | 12 | 12 | 12 | 12 | 12 | 12 | 12 |
| | Hydrocarbon | AF6 | Nippon Oil Corporation | 50 | 50 | 50 | 50 | 50 | 50 | 50 | 50 | 50 |
| Total | | | | 100 | 100 | 100 | 100 | 100 | 100 | 100 | 100 | 100 |
| Treatment of ink with ion-exchange resin | | | | No | No | No | No | Yes | No | No | No | No |
| Ca concentration in ink (ICP emission analysis) (ppm) | | | | 6.4 | 7.6 | 6.7 | 3.9 | 5.2 | 4.6 | 14.1 | 9.8 | 11.5 |
| Mg concentration in ink (ICP emission analysis) (ppm) | | | | 1.4 | 1.5 | 1.4 | 0.9 | 1.1 | 1.1 | 3.6 | 2.8 | 2.7 |
| Rate of ejection failure | | | | A | B | A | A | A | A | D | D | D |

As shown in Table 2, the ink of the invention with the reduced polyvalent metal content, where the calcium content in the ink is 8 ppm or less and the magnesium content in the ink is 3 ppm or less, resulted in low rates of ejection failure of the nozzles. It should be noted that, although the copper phthalocyanine with reduced polyvalent metal content and the conventional copper phthalocyanine are shown as examples of the pigment in Examples 1 to 5 and Comparative Examples 1 and 2, and the Disazo Yellow with reduced polyvalent metal content and the conventional Disazo Yellow are shown as examples of the pigment in Reference Example 6 and Comparative Example 3, other pigments, dispersants, and the like, are also produced by synthesis and production processes using an industrial water, and contain polyvalent metals which are contained in the industrial water by a significant amount. It is therefore estimated that similar results can be obtained by reducing the polyvalent metal content in cases where other pigments, and like, are used.

## Claims

1. An oil-based inkjet ink comprising at least a pigment, a dispersant and an organic solvent, wherein the pigment is copper phthalocyanine, all the organic solvent used in the ink is water-insoluble, a calcium content in the ink is 8 ppm or less, and a magnesium content in the ink is 3 ppm or less, and further wherein said ink is obtainable by a method including preparing said ink from raw materials comprising at least said pigment, said dispersant and said organic solvent, and washing a raw material with ion-exchanged water or contacting said prepared ink with an ion-exchange resin to reduce the calcium content in the ink and the magnesium content in the ink.

2. A method for preparing an oil-based inkjet ink comprising at least a pigment, a dispersant and an organic solvent, wherein the pigment is copper phthalocyanine, all the organic solvent used in the ink is water-insoluble, a calcium content in the ink is 8 ppm or less, and a magnesium content in the ink is 3 ppm or less, the method including
preparing said ink from raw materials comprising at least said pigment, said dispersant and said organic solvent, and
washing a raw material with ion-exchanged water or contacting said prepared ink with an ion-exchange resin to reduce the calcium content in the ink and the magnesium content in the ink.

3. Use of an oil-based inkjet ink comprising at least a pigment, a dispersant and an organic solvent, wherein the pigment is copper phthalocyanine, all the organic solvent used in the ink is water-insoluble, a calcium content in the ink is 8 ppm or less, and a magnesium content in the ink is 3 ppm or less, for suppressing accumulation of solid in the vicinity of nozzles of an inkjet head.

## Patentansprüche

1. Tintenstrahl-Tinte auf Ölbasis aufweisend mindestens ein Pigment, ein Dispergiermittel und ein organisches Lösungsmittel, wobei das Pigment Kupfer-phthalocyanin ist, das gesamte in der Tinte verwendete organische Lösungsmittel wasserunlöslich ist, der Calciumgehalt in der Tinte 8 ppm oder weniger beträgt, und der Magnesiumgehalt in der Tinte 3 ppm oder weniger beträgt, und wobei außerdem die Tinte erhältlich ist durch ein Verfahren, das das Herstellen der Tinte aus Ausgangsmaterialien, die mindestens das Pigment, das Dispergiermittel und das organische Lösungsmittel aufweisen, und das Waschen des Ausgangsmaterials mit Wasser, das einem lonenaustausch unterzogen wurde, oder das Kontaktieren der hergestellten Tinte mit einem lonenaustauscherharz, um den Calciumgehalt in der Tinte und den Magnesiumgehalt in der Tinte zu verringern, umfasst.

2. Verfahren zur Herstellung einer Tintenstrahl-Tinte auf Ölbasis, aufweisend mindestens ein Pigment, ein Dispergiermittel und ein organisches Lösungsmittel, wobei das Pigment Kupfer-phthalocyanin ist, das gesamte in der Tinte verwendete organische Lösungsmittel wasserunlöslich ist, der Calciumgehalt in der Tinte 8 ppm oder weniger beträgt und der Magnesiumgehalt in der Tinte 3 ppm oder weniger beträgt, wobei das Verfahren
das Herstellen der Tinte aus Ausgangsmaterialien, die mindestens das Pigment, das Dispergiermittel und das organische Lösungsmittel aufweisen, und
das Waschen des Ausgangsmaterials mit Wasser, das einem lonenaustausch unterzogen wurde, oder das Kontaktieren der hergestellten Tinte mit einem lonenaustauscherharz, um den Calciumgehalt in der Tinte und den Magnesiumgehalt in der Tinte zu verringern, umfasst.

3. Verwendung einer Tintenstrahl-Tinte auf Ölbasis, aufweisend mindestens ein Pigment, ein Dispergiermittel und ein organisches Lösungsmittel, wobei das Pigment Kupfer-phthalocyanin ist, das gesamte in der Tinte verwendete organische Lösungsmittel wasserunlöslich ist, der Calciumgehalt in der Tinte 8 ppm oder weniger beträgt und der Magnesiumgehalt in der Tinte 3 ppm oder weniger beträgt, zur Unterdrückung einer Ansammlung von Feststoff in der Umgebung von Düsen eines Tintenstrahlkopfs.

## Revendications

1. Encre pour jet d'encre à base d'huile, comprenant au moins un pigment, un agent dispersant, et un solvant organique, dans laquelle le pigment est de la phtalocyanine de cuivre ; tout le solvant organique utilisé dans l'encre est insoluble dans l'eau ; une teneur en calcium dans l'encre est inférieure ou égale à 8 ppm, et une teneur en magnésium dans l'encre est inférieure ou égale à 3 ppm, et dans laquelle, en outre, ladite encre peut être obtenue par un procédé incluant la préparation de ladite encre à partir de matières premières comprenant au moins ledit pigment, ledit agent dispersant, et ledit solvant organique, et le lavage d'une matière première avec de l'eau ayant subi un échange d'ions, ou la mise en contact de ladite encre préparée avec une résine échangeuse d'ions afin de réduire la teneur en calcium dans l'encre et la teneur en magnésium dans l'encre.

2. Procédé de préparation d'une encre pour jet d'encre à base d'huile, comprenant au moins un pigment, un agent dispersant, et un solvant organique, dans lequel le pigment est de la phtalocyanine de cuivre ; tout le solvant organique utilisé dans l'encre est insoluble dans l'eau ; une teneur en calcium dans l'encre est inférieure ou égale à 8 ppm, et une teneur en magnésium dans l'encre est inférieure ou égale à 3 ppm, le procédé comprenant les étapes consistant à :
préparer ladite encre à partir de matières premières comprenant au moins ledit pigment, ledit agent dispersant, et ledit solvant organique, et
laver une matière première avec de l'eau ayant subi un échange d'ions, ou mettre en contact ladite encre préparée avec une résine échangeuse d'ions afin de réduire la teneur en calcium dans l'encre et la teneur en magnésium dans l'encre.

3. Utilisation d'une encre pour jet d'encre à base d'huile, comprenant au moins un pigment, un agent dispersant, et un solvant organique, dans laquelle le pigment est de la phtalocyanine de cuivre ; tout le solvant organique utilisé dans l'encre est insoluble dans l'eau ; une teneur en calcium dans l'encre est inférieure ou égale à 8 ppm, et une teneur en magnésium dans l'encre est inférieure ou égale à 3 ppm, afin de supprimer l'accumulation de solides dans le voisinage de buses d'une tête à jet d'encre.
